# EUROPEAN PATENT APPLICATION

(11) **EP 1 898 647 A1**
(43) Date of publication of application: **12.03.2008**
(21) Application number: 06756988.9
(22) Date of filing: 05.06.2006
(51) Int. Cl.: H04N 7/26, H04J 3/00, H04J 11/00, H04N 5/46, H04N 7/173

(54) **INTERPOLATING APPARATUS**

(30) Priority: 27.06.2005 JP 2005186249
(71) Applicant: Pioneer Corporation, Tokyo 153-8654 (JP)
(72) Inventor: NAKAMURA, Shigeki Kawagoe Koujou, Pioneer Corp., Saitama 3508555 (JP)
(74) Representative: Popp, Eugen
(86) International application number: PCT/JP2006/311242
(87) International publication number: WO 2007/000874

(57) **Abstract**

It is an object of the invention to provide an interpolation device which, in receiving and reproducing simultaneous digital broadcasting, interpolates and thus corrects video portion and audio portion responsible for a decreased picture quality or a decreased sound quality.

The interpolation device comprises an interpolation control unit 9 and interpolation units 7, 9. The interpolation control unit 9 detects an error signal contained in a video signal and an audio signal of a program being received and reproduced, supplies a switchover period control signal SWv indicating an error period τv of the video signal to the interpolation unit 7, and a switchover period control signal SWa indicating an error period τa of the audio signal to the interpolation unit 8. The interpolation unit 7 extracts a video signal of simple moving image corresponding to the error period τv, generates from an extracted video signal an interpolation video signal adapted to the format of a video signal being received and reproduced, thereby interpolating the error signal contained in the video signal. The interpolation unit 8 extracts an audio signal of simple moving image corresponding to the error period τa, generates from an extracted audio signal an interpolation audio signal adapted to the format of an audio signal being received and reproduced, thereby interpolating the error signal contained in the audio signal.

## Description

### [Technical Field]

The present invention relates to an interpolation device which performs an interpolation to correct an image portion or an audio portion that aggravates a picture quality or a sound quality when receiving and reproducing a digital broadcast.

### [Background Technique]

Digital broadcast has been started as a broadcasting media of a new era, while terrestrial digital broadcast has been started following BS digital broadcast and 110-degree CS digital broadcast.

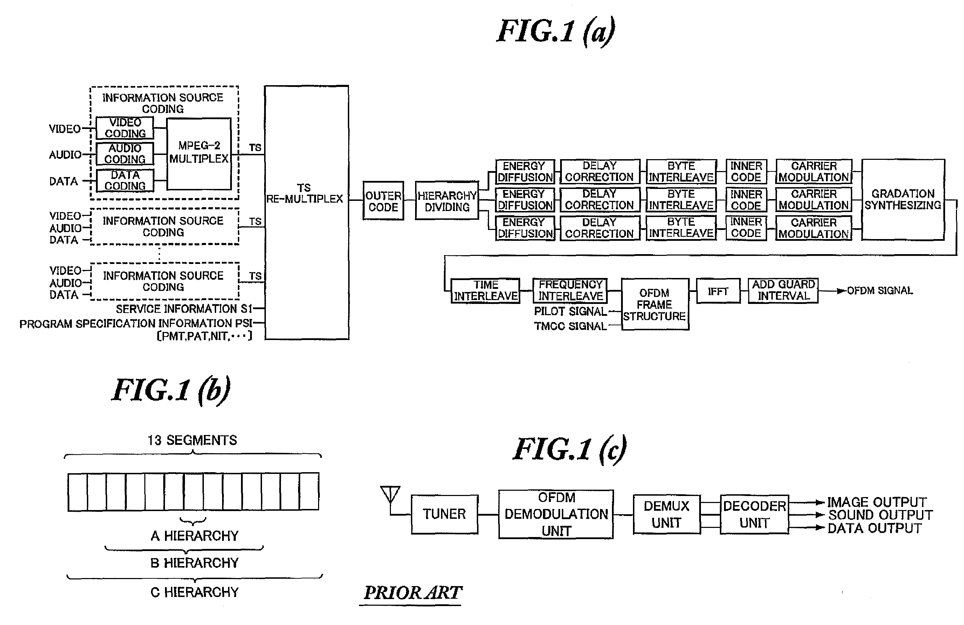

As to a digital broadcast which can be used to replace a terrestrial analog broadcast, a brief description can be given as follows. Namely, terrestrial digital broadcast is called ISDB-T (Integrated Services Digital Broad-casting for Terrestrial) system and has been realized by including a transmission system on a broadcast station side shown in Fig. 1(a) also including a receiver shown in Fig. 1(c).

The transmission system on the broadcast station side shown in Fig. 1(a) can be roughly divided into two sections, one is an information source coding section and the other a transmission line coding section.

In the information source coding section, the data of one or more groups of video signals or audio signals forming a program is coded and then each group of data is converted into TS (Transport Stream) having a packet structure. Here, as information source coding system, there have been in use a video coding system including MPEG-2 (Moving Picture Experts Group-phase 2) video system and an audio coding system including MPEG-2 AAC (Advanced Audio Coding) audio system. The information source coded video signals and audio signals as well as their data are converted by MPEG-2 multiplex section into PES (Packetized Elementary Stream) packet, using MPEG-2 system. Meanwhile, the information source coded video signals and audio signals as well as their data are converted into TSP (Transport Stream Packet) consisting of PES packet and having a fixed length. Further, a plurality of transport stream packets TSP are put in a row so as to be converted into a transport stream TS.

Next, as to the transmission-line coding section, in TS re-multiplexing unit, one or more transport streams TS generated in the information source coding unit are decomposed into the transport stream packets TSP. Then, SI (Service Information) or PSI (Program Specification Information) are added and multiplexed by virtue of MPEG-2 System, thereby converting the above signals into signals having a multiplex frame structure, followed by performing a coding process using outer code (Reed Solomon code).

Here, the service information SI is information related to a service of a program arrangement or the like which is used by a broadcasting company.

The program specification information PSI consists of PAT (Program Association Table and PMT (Program Mapped Table), NIT (Network Information Table) or the like. The program association table PAT is descriptive information indicating the composition of an entire program which is needed in program selection on the receiver side. The program mapped table PMT is detailed descriptive information indicating various programs in connection with the program association table PAT. The network information table NIT is descriptive information indicating each program is contained in which carrier.

Then, the program association table PAT, the program mapped table PMT, and the network information table NIT or the like are made related to identification data called PID (Packet Identifier) to be stored in the head portion of each transport stream packet TSP, and stored in predetermined transport stream packets TSP so as to be transmitted.

Therefore, the receiver side identifies each transport stream packet TSP in accordance with identification data PID, and analyzes the program mapped table PMT, program association table PAT and the network information table NIT or the like which are program specification information PSI, thereby individually separating video data, audio data, and PES packet of data and then reproducing the same.

Next, when signals coded by outer codes are hierarchically transmitted, TS- re-multiplexed signals are hierarchically divided with 3-hierarchy structure being the maximum hierarchy structure, followed by carrying out in each hierarchy an energy dispersal, delay correction, and byte interleave, and performing a coding process based on inner codes (folding-in codes). Further, after performing a byte interleave and a carrier modulation, a gradation synthesizing unit carries out a gradation synthesizing process, thereby outputting synthesized signals.

Namely, in a terrestrial digital broadcast, as a transmission-line coding method there has been in use an OFDM (Orthogonal Frequency Division Multiplex) modulation technique shown in Fig. 1(b). As shown, the transmission is performed using 13-segment structure with a predetermined bandwidth being one segment, followed by changing transmission parameter such as modulation system or the like in each segment, performing an appropriate combination within the total number of the segments and the maximum 3-hierarchy structure (A hierarchy, B hierarchy, and C hierarchy), thereby effecting a hierarchy transmission.

Then, by performing the aforementioned hierarchy dividing and a predetermined parallel processing so as to effect a gradation synthesizing, it is possible to transmit simple moving images using the segments of A hierarchy for partial reception, to hierarchically transmit a standard television program suitable for mobile reception and another standard television program suitable for fixed reception, or to hierarchically transmit a HDTV (High Definition Television) program, using the segments of B hierarchy or C hierarchy formed by combining the remaining 12 segments. Even at this time, it is possible to perform simultaneous broadcasting.

Then, after a time interleave and a frequency interleave are applied to the above-mentioned gradation synthesized signals in order to ensure a multipass-proof performance, TMCC (Transmission and Multiplexing Configuration Control) signals and pilot signals are added which are control signals generated for the receiver side to exactly and simultaneously receive the programs transmitted from the broadcast station, followed by applying an IFFT (Inverse Fast Fourier Transform) to the signals having OFDM frame structure, thereby generating OFDM signals by adding guard intervals. Then, the OFDM signals are transmitted from the front end in the form of broadcasting wave.

On the other hand, as shown in Fig. 1(c), the receiver side receives through its tuner a broadcasting wave which is a coming radio wave, A/D converts an intermediate frequency signal (IF signal) generated by virtue of frequency conversion, thereby allowing the OFDM demodulation unit to perform a demodulation. Namely, the OFDM demodulation unit performs a processing which is substantially contrary to the transmission line coding performed on the broadcast station side, thereby reproducing transport stream TS.

Then, DEMUX unit analyzes the above-mentioned program specification information PSI, individually separates the video data and audio data contained in the transport stream TS and packet elementary stream PES of the data in accordance with the analyzing result, followed by performing a decoding process using the decoder unit in accordance with an MPEG-2 video system and an MPEG-2 AAC audio system, thereby having the original video signal and audio signal changed back to data and outputting the same. Afterwards, the monitor and speaker are driven in accordance with the information such as video signal and audio signal which have been decoded, thereby making it possible to watch and hear a program being broadcasted.

However, when using the aforementioned receiver to watch and listen to a terrestrial digital broadcast program such as a high quality TV program, once there is a deterioration or the like in a reception state, necessary information will be lacking and noise will occur, resulting in a deterioration in the quality of reproduced image displayed on the monitor, as well as a deterioration in the quality of a sound reproduced by a speaker.

In order to solve the aforementioned problem, a conventional receiver has adopted the same technique as "error correction device" disclosed in Japanese Unexamined Patent Application Publication No. Hei 8-167998 (Patent Document 1). According to this technique, when the aforementioned unit (MPEG decoder) decodes video and audio signals in accordance with MPEG-2 video system and MPEG-2 AAC audio system, an interpolation signal will be generated by virtue of a signal happening before an error signal caused due to the lacking of information and the occurring of noise or the like, thereby interpolating the error signal using the interpolation signal (i.e., replacing the error signal with the interpolation signal), thus reproducing video and audio signals having an acceptable quality.

Patent Document 1: Japanese Unexamined Patent Application Publication No. Hei 8-167998.

### [Disclosure of the Invention]

### [Problem(s) to be Solved by the Invention]

As discussed above, in a conventional receiver which receives a digital broadcast, if there is a deterioration in the quality of image and sound in audio/visual process due to an influence caused by a deterioration in a reception state, an error signal responsible for the deteriorated quality is detected from a signal processed in a decoding, an interpolation signal is generated in accordance with a signal occurring before the detected error signal, thereby interpolating the error signal.

However, if, for example, a video portion causing a quality deterioration due to an error signal, occurs within an image having a quick movement or within an image which changes to other thing, a correlation between the video portion and a video signal occurring before the error signal will become low. As a result, it will be difficult to generate an interpolation signal capable of making adj acent images seamless. Moreover, in order to deal with the image having a quick movement and the image which changes to other thing, it is necessary to provide a circuit having a high speed computing function.

Besides, even when interpolating an audio portion which causes a quality deterioration due to an error signal, there is still existing a similar problem resembling to an example in which an image is interpolated.

The present invention has been accomplished in view of the aforementioned conventional problem and it is an object of the invention to provide an interpolation device capable of interpolating a video portion responsible for a deteriorated video quality with a video portion having a higher quality.

It is another object of the present invention to provide an interpolation device capable of interpolating an audio portion responsible for a deteriorated audio quality with an audio portion having a higher quality.

It is a further object of the present invention to provide an interpolation device capable of improving an image quality by virtue of an interpolation within a frame or an interpolation within a field.

It is one more object of the present invention to provide an interpolation device which does not need a high-speed interpolation.

### [Means for Solving the Problem(s)]

An invention recited in claim 1 is an interpolation device for interpolating an error signal contained in a video signal outputted from a receiver which receives simultaneous broadcasting. The interpolation device comprises: interpolation control means which detects an error signal contained in a video signal of a program of a hierarchy being received and reproduced by the receiver, and obtains program specification information of the video signal of the program of the hierarchy being received and reproduced, as well as program specification information of a hierarchy of simple moving image, and outputs a switchover period control signal indicating the period of the detected error signal, and an image-related signal indicating the program specification information; and interpolation means which, in accordance with the switchover period control signal and the image-related signal, extracts a video signal of simple moving image corresponding to the period of the error signal, generates an interpolation video signal by performing a format transform for adapting the extracted video signal of simple moving image to the format of the video signal of the program of the hierarchy being received and reproduced, and interpolates, during the period of the error signal and using the interpolation video signal, the error signal contained in the video signal of the program of the hierarchy being received and reproduced.

An invention recited in claim 3 is an interpolation device for interpolating an error signal contained in an audio signal outputted from a receiver which receives simultaneous broadcasting. The interpolation device comprises: interpolation control means which detects an error signal contained in an audio signal of a program of a hierarchy being received and reproduced by the receiver, and obtains program specification information of the audio signal of the program of the hierarchy being received and reproduced, as well as program specification information of a hierarchy of simple moving image, and outputs a switchover period control signal indicating the period of the detected error signal, and a sound-related signal indicating the program specification information; and interpolation means which, in accordance with the switchover period control signal and the sound-related signal, extracts an audio signal of simple moving image corresponding to the period of the error signal, generates an interpolation audio signal by performing a format transform for adapting the extracted audio signal of simple moving image to the format of the audio signal of the program of the hierarchy being received and reproduced, and interpolates, during the period of the error signal and using the interpolation audio signal, the error signal contained in the audio signal of the program of the hierarchy being received and reproduced.

An invention of the interpolation device recited in claim 5 comprises the interpolation control means and the interpolation means recited in claim 1 and the interpolation control means and the interpolation means recited in claim 3.

### [Brief Description of the Drawings]

Fig. 1 is a block diagram briefly showing the structure of a terrestrial digital broadcasting system.
Fig. 2 provides a block diagram showing the structure of an interpolation device formed according to one embodiment of the present invention and explanatory views showing the functions thereof.
Fig. 3 is a block diagram showing the structure of an interpolation device as a more detailed embodiment.

### [Best Mode of Carrying out the Invention]

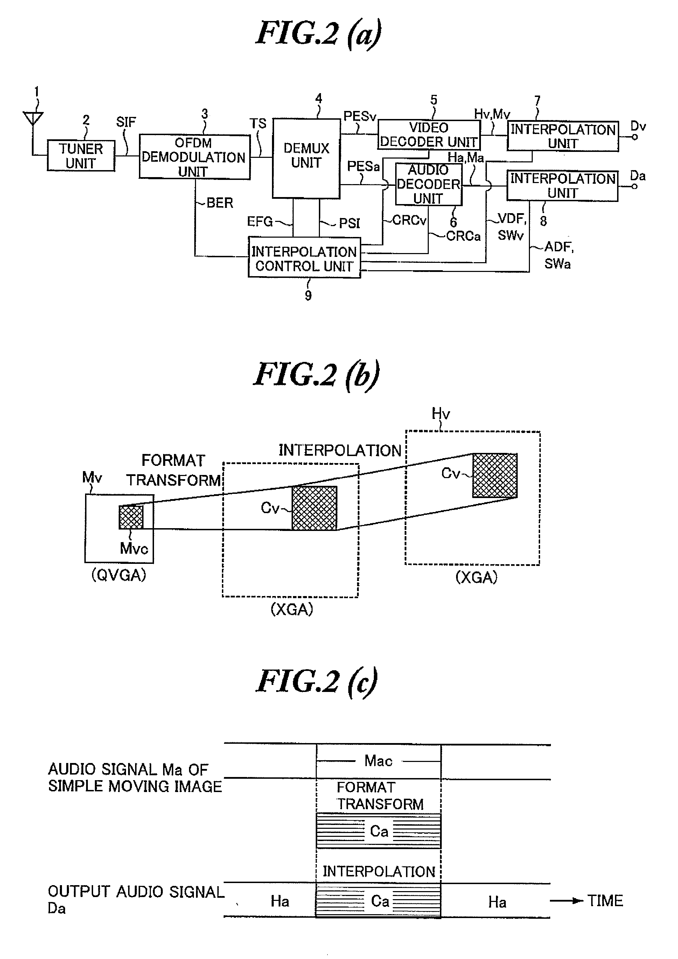

Next, description will be given to explain a preferred embodiment of the present invention with reference to Fig. 2 which includes a block diagram showing the structure of an interpolation device formed according to one embodiment.

As shown in Fig. 2 (a), the interpolation device of the present embodiment is provided in a receiver which receives terrestrial digital broadcast. The receiver comprises a reception antenna 1, a tuner unit 2, an OFDM demodulation unit 3, a video decoder unit 5, and an audio decoder unit 6. The interpolation device comprises interpolation units 7, 8 and an interpolation control unit 9.

At first, a brief description will be given to explain some basic functions of the receiver. Namely, once a user or the like operates to select a desired broadcast station, the tuner unit 2 will generate a local oscillation signal to receive a broadcasting wave of a selected broadcast station, and produces an intermediate frequency signal (IF signal) by virtue of a frequency conversion effected by mixing the local oscillation signal with RF signal fed from the reception antenna 1. The IF signal is then A/D-converted into digital IF signal SIF by virtue of an A/D converter (not shown).

The OFDM demodulation unit 3 performs a demodulation contrary to a transmission-line coding performed on the broadcast station side, so as to process the digital IF signal SIF, thereby reproducing transport stream TS and supplying the same to the DEMUX unit 3. Furthermore, during demodulation, once the OFDM demodulation unit 3 detects uncorrectable error data, an error flag EFG indicating the error data will be included in the transport stream packet TSP and then outputted.

The DEMUX unit 4 identifies each transport stream packet TSP in accordance with the identifying data PID stored in the head portion of each transport stream packet TSP forming the transport stream TS, followed by extracting and analyzing a program map table PMT, a program association table PAT, and a network information table NIT which are program specification information PSI correlated with the identifying data PID. Then, the DEMUX unit 4 operates in accordance with the analyzing result to individually separate image and sound within each transport stream packet TSP and PES packet of the data. Subsequently, the DEMUX unit 4 supplies in synchronism the video PES packet PESv and the audio PES packet PESa to the video decoder unit 5 and the audio decoder unit 6. Further, the PES packet of data is also supplied to data decoder unit (not shown).

The video decoder unit 5 decodes the coded video signals within the PES packet PESv in accordance with MPEG-2 video system, thereby changing the video signals back to original video signals. Further, when receiving simultaneous broadcasting in which simple moving image, high quality television and standard television are combined and hierarchically transmitted, once a user or the like selects the channels of high quality television and standard television other than simple moving image, the above signals will be changed back to the original video signals Mv of the simple moving image, and the original video signals Hv of the high quality television or standard television and then outputted.

Furthermore, the video decoder unit 5, when decoding into original video signal Hv the coded high quality television video signal or standard television video signal other than simple moving image, detects whether there is an error in the coded video signal, thereby outputting an image error detection signal CRCv indicating a period during which the detected error signal is occurring. For example, an error is detected by using CRC (Cyclic Redundancy Check) added to the coded video signal, thereby outputting an image error detection signal CRCv indicating a period during which the detected error signal is occurring.

The audio decoder unit 6 decodes the coded audio information within the PES packet PESa in accordance with MPEG-2 AAC audio system, so as to change the audio signal back into original audio signal. Further, when receiving the aforementioned simultaneous broadcasting, the above audio signal is changed back to original audio signal Ma of simple moving image, as well as original audio signal Ha of high quality television or standard television.

Furthermore, the audio decoder unit 6, when decoding into original audio signal Ha the coded high quality television audio signal or standard television audio signal other than simple moving image, detects whether there is an error in the coded audio signal, thereby outputting an audio error detection signal CRCv indicating a period during which the detected error signal is occurring. For example, an error is detected by using CRC (Cyclic Redundancy Check) added to the coded audio signal, thereby outputting an audio error detection signal CRCa indicating a period during which the detected error signal is occurring.

Next, description will be given to explain the interpolation device.
The interpolation control unit 9 analyzes the contents of the program specification information PSI to specify a hierarchy (channel of high quality television or standard television) selected by a user or the like when receiving simultaneous broadcasting. Further, the interpolation control unit 9 receives: error flag EFG outputted when the DEMUX unit 4 divides the transport stream TS into video PES and audio PES or the like; and video error detection signal CRCv and audio error detection signal CRCa which are outputted from the video decoder unit 5 and the audio decoder unit 6. Then, the interpolation control unit 9 detects, from error signal information (a signal indicating the error information contained in the video error detection signal CRCv) of error flag EFG and video error detection signal CRCv, a period τv during which an error within the decoded video signal Hv is occurring. Moreover, the interpolation control unit 9 detects, from error signal information (a signal indicating the error information contained in the audio error detection signal CRCa) of the error flag EFG and audio error detection signal CRCa, a period τa during which an error within the decoded audio signal Ha is occurring.

Then, the interpolation control unit 9 supplies to the interpolation unit 7 an image-related signal VDF which has information (which is information obtained from the program specification information PSI) relating to the image of a hierarchy now being selected by a user or the like, as well as a switchover period control signal SWv indicating a period τv, thereby supplying to the interpolation unit 8 a sound-related signal VDF which has information (which is information obtained from the program specification information PSI) relating to the sound of a hierarchy now being selected by a user or the like, as well as a switchover period control signal SWa indicating a period τa.

The interpolation unit 7, at the time the image-related signal VDF and the switchover period control signal SWv are not supplied hereto, continues to output the video signal of a hierarchy now being selected by a user or the like. For example, once a high quality television and a standard television are selected, these video signals Hv will be outputted as output video signal Dv. On the other hand, when a simple moving image is selected, its video signal Mv will be outputted as an output video signal Dv.

On the other hand, the interpolation unit 7, at the time the video signal Hv is being outputted as an output video signal Dv, once the image-related signal VDF and the switchover period control signal SWv are supplied hereto, the output of the video signal Hv having an error within the period τv indicated by the switchover period control signal SWv will be stopped. Instead, an interpolation video signal Cv generated from the video signal Mv of simple moving image will be outputted as an output signal Da during the period τv.

Namely, once an error occurs in a video signal Hv within the above period τv, a video signal Mvc corresponding to the period τv will be extracted from the video signal Mv of simple moving image, followed by investigating, from the contents of the image-related signal VDF, the video signal Hv and the respective format information (the number of effective scanning lines, scan, frame rate, field rate, etc.) of the video signal Mvc of simple moving image, performing a format transform for adapting the video signal Mvc of simple moving image to the format of the video signal Hv, thereby outputting the format-transformed interpolation signal Cv during the above period τv.

Namely, as shown in Fig. 2(b), when the format of the video signal Hv has an image size of XGA and the format of the video signal Mvc of simple moving image Mvc has an image size of QVGA, the video signal Mvc of QVGA will be enlarged (scaled-up) to an image size of XGA, thereby generating an interpolation video signal Cv having an image size of XGA corresponding to an error period τv within the image signal Hv. Then, during the period τv, the interpolation video signal Cv having an image size of XGA will be outputted. In this way, replacing an error occurring portion within the video signal Hv with the interpolation video signal Cv makes it possible to generate and then produce an output video signal Dv capable of preventing a decreased picture quality.

Further, if the frame rate or the field rate of the video signal Hv is FT1 (for example, 60 frames/(second))and the frame rate or the field rate of the interpolation video signal Cv is FT2 (for example, 30 frames/(second)), an interpolation video signal Cv having an image size of XGA will be outputted at a number of times corresponding to a ratio(FT1/FT2) of the frame rate or field rate FT1 to the frame rate or field rate FT2, so that the frame rates or the field rates are made coincident with each other. In this way, the interpolation unit 7 makes the interpolation video signal Cv coincident with the frame rate and the field rate of the video signal Hv, so as to generate and produce the output video signal Dv capable of reproducing seamless image.

Next, the interpolation unit 8, at the time the sound-related signal ADF and the switchover period control signal SWa are not supplied, continues to output an audio signal of a hierarchy now being selected by a user or the like. For example, when a high quality television or a standard television is selected, its audio signal Ha will be produced as an output sound signal Da. Then, when simple moving image is selected, its audio signal Ma will be produced as an output sound signal Da.

On the other hand, at the time an audio signal Ha is being produced as an output sound signal Da, once a sound-related signal ADF and a switchover period control signal SWa are supplied, the interpolation unit 8 will stop the outputting of an audio signal Ha having an error within a period τv indicated by a switchover period control signal SWa, but output during a period τa an interpolation sound signal Ca generated from an audio signal Ma of simple moving image.

Namely, when an error is occurring in the audio signal Ha during the above period τa, an audio signal Mac corresponding to the period τa is extracted from the audio signal Ma of simple moving image. Further, the respective format information of the audio signal Ha and the audio signal Mac of simple moving image (audio system information such as 5.1-channel audio and 2-channel stereo or the like) are extracted from the sound-related signal ADF, followed by performing a format transform for adapting the audio signal Mac of simple moving image to the format of the audio signal Ha, thereby outputting the format-transformed interpolation audio signal Ca during the above period τa.

Namely, as shown in Fig. 2 (c), if the format of the audio signal Ha is 5.1-channel audio and the format of the audio signal Mac of simple moving image is 2-channel stereo, the audio signal Mac of 2-channel stereo will be transformed into an interpolation audio signal Ca of false 5.1-channel audio which is then outputted during the period τa. In this way, the interpolation unit 8, by replacing an error occurring portion of the audio signal Ha with the interpolation video signal Ca, generates and then outputs an output audio signal Da capable of preventing a deteriorated sound quality.

As described above, according to the interpolation device of the present embodiment, during a process in which a receiver is receiving simultaneous broadcasting, receiving and reproducing a channel of a hierarchy other than a simple moving image, once an error occurs in the video signal Hv, the interpolation control unit 9 will detect the period τv of the error, while the interpolation unit 7 will further extract a video signal of simple moving image corresponding to the period τv, with an extracted video signal Mvc being format-transformed into an interpolation video signal Cv adapted to the format of the video signal Hv being received and reproduced. In this way, since the video signal Hv is interpolated with the interpolation video signal Cv during the period τv of the error, it is possible to generate an output video signal Dv capable of preventing a deteriorated picture quality.

Namely, the simple moving image, though having only a small amount of information, will be transmitted hereto using a strong modulation system not easily susceptible to any change in a radio wave transmission line. For this reason, when an error has occurred in receiving and reproducing for example a high quality television other then simple moving image, an interpolation video signal Cv will be generated in accordance with the video signal Mvc of simple moving image corresponding to the period τv of the error, and the period τv of the error of the video signal Hv in receiving and reproducing the high quality television will be interpolated with the interpolation video signal Cv, thereby making it possible to generate an output video signal Dv capable of considerably improving a picture quality as compared with an example in which the interpolation is not performed.

Moreover, according to the interpolation device of the present embodiment, during a process in which a receiver is receiving simultaneous broadcasting, receiving and reproducing a channel of a hierarchy other than a simple moving image, even if an error occurs in the audio signal Ha, it is still possible to generate an output audio signal capable of preventing a deteriorated sound quality. Namely, once an error occurs in the audio signal Ha being received and reproduced, the interpolation control unit 9 will detect the period τa of the error, while the interpolation unit 8 will further extract an audio signal of simple moving image corresponding to the period τa, with an extracted audio signal Mac being format-transformed into an interpolation video signal Ca adapted to the format of the audio signal Ha being received and reproduced. In this way, since the audio signal Ha is interpolated with the interpolation video signal Ca during the period τa of the error, it is possible to generate an output video signal Da capable of preventing a deteriorated sound quality.

Moreover, according to the interpolation device of the present embodiment, as described above, during a process in which a receiver is receiving and reproducing a channel of a hierarchy other than a simple moving image, when an error occurs in the video signal Hv, since the video signal Hv is interpolated with an interpolation video signal Cv during the period τv of the error, it is possible to perform an interpolation within a frame or a field without performing an interpolation in each frame period or field period. Therefore, it is possible to partially interpolate only a portion in which an error within the video signal Hv has occurred, and make an interpolated portion not visually remarkable, thereby improving a picture quality.

Moreover, the interpolation device of the present embodiment generates an interpolation video signal Cv from a video signal of simple moving image, rather than predicting an interpolation signal from a signal before a video signal in which an error has occurred. Therefore, it is possible to quickly perform an interpolation processing even if an error occurs when an image has a quick movement or changes to other thing. As a result, it is possible to quickly perform an interpolation processing without performing a high speed computation.

Although the above description has explained the interpolation units 7, 8 and the interpolation control unit 9 as respective individual circuits, it is also possible for these units to be formed of a microprocessor (MPU) or a digital signal processor (DSP), thereby exhibiting the same functions by executing a predetermined program.

### [Example]

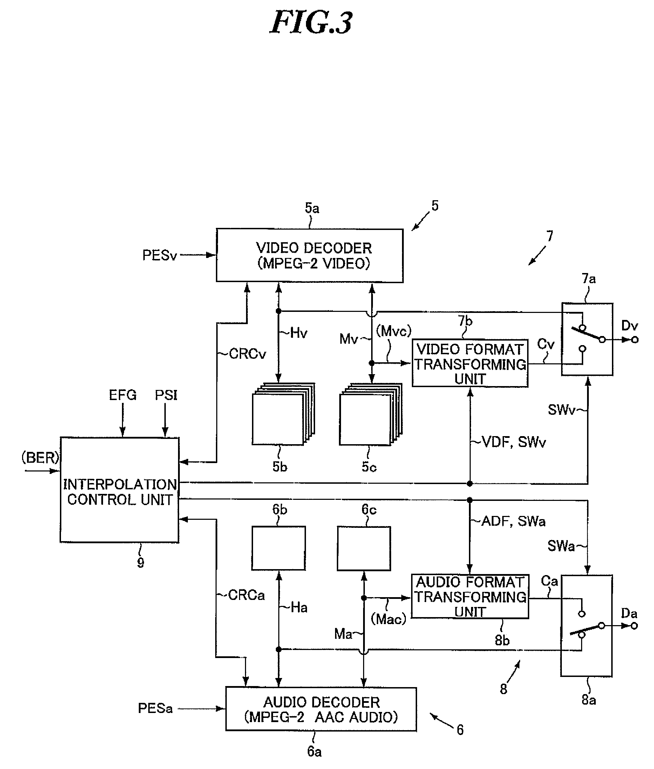

Next, description will be given to explain a concrete example with reference to Fig. 3 which is a block diagram showing the configuration of an interpolation device formed according to the present embodiment, using the same reference numerals to represent the elements which are the same as or corresponding to those in Fig. 2(a).

As shown in Fig. 3, the interpolation device of the present embodiment comprises: an interpolation section 7 including a switchover unit 7a and a video format transforming unit 7b; an interpolation section 8 including a switchover unit 8a and a video format transforming unit 8b; and an interpolation control section 9. The interpolation section 7 is provided corresponding to a video decoder unit 5 and the interpolation section 8 is provided corresponding to an audio decoder unit 6.

Here, the video decoder unit 5 includes a video decoder 5a which decodes PES packet PESv of an image supplied from the DEMUX section 4 shown in Fig. 2 (a) in accordance with MPEG-2 video system, as well as buffer memories 5b and 5c for temporarily storing the decoded video signals.

Furthermore, the video decoder 5a temporarily stores in the buffer memory 5b a video signal (a decoded video signal) Hv of a hierarchy (a channel other than simple moving image) being selected by a user or the like when receiving simultaneous broadcasting. The video signal is then outputted from the buffer memory 5b. Meanwhile, the video signal (a decoded video signal) Mv of simple moving image is temporarily stored in the buffer memory 5c and then outputted therefrom. Furthermore, when decoding the video signal Hv of the above-selected hierarchy (a channel other than simple moving image), CRC will be used to detect whether or not there is an error, thereby outputting a video error detection signal CRCv indicating a detected error period τv.

On the other hand, the audio decoder 6a temporarily stores in the buffer memory 6b an audio signal (a decoded audio signal) Ha of a hierarchy (a channel other than simple moving image) being selected by a user or the like when receiving simultaneous broadcasting. The audio signal is then outputted from the buffer memory 6b. Meanwhile, the audio signal (a decoded audio signal) Mv of simple moving image is temporarily stored in the buffer memory 6c and then outputted therefrom. Furthermore, when decoding the audio signal Ha of the above-selected hierarchy (a channel other than simple moving image), CRC will be used to detect whether or not there is an error, thereby outputting an audio error detection signal CRCa indicating a detected error period τa.

The interpolation control unit 9 analyzes the contents of the program specification information PSI to specify a hierarchy (a channel of high quality television or standard television) being selected by a user or the like when receiving simultaneous broadcasting. Further, the interpolation control unit 9 receives an error flag EFG outputted when the DEMUX unit 4 separates the transport stream TS into video PES and audio PES, a video error detection signal CRCv and an audio error detection signal CRCa which are outputted from the video decoder unit 5 and the audio decoder unit 6. Then, the interpolation control unit 9 detects, from error signal information such as the error flag FEG and the video error detection signal CRCv, a period τv during which an error within the decoded video signal Hv is occurring, also detects, from error signal information such as the error flag FEG and the audio error detection signal CRCa, a period τa during which an error within the decoded audio signal Ha is occurring. On the other hand, when detecting a period τa during which an error within an audio signal Ha is occurring, it is also possible to detect such a period τa in accordance with BER (Bits Error Rate) and an audio error detection signal CRCa detected when the OFDM demodulation unit 3 performs an OFDM demodulation.

Further, the interpolation control unit 9 supplies to the interpolation unit 7, an image-related signal VDF having information (information obtained from the program specification information PSI) concerning an image of a hierarchy being selected by a user or the like and a switchover period control signal SWv indicating a period τv, and supplies to the interpolation unit 8, a sound-related signal AUF having information (information obtained from the program specification information PSI) concerning a sound of a hierarchy being selected by a user or the like and a switchover period control signal SWa indicating the period τa.

The video format transforming unit 7b, upon receiving an image-related signal VDF and a switchover period control signal SWv from the interpolation control unit 9, analyzes the contents of the image-related signal VDF, thereby identifying the format, frame rate and field rate of the video signal Hv stored in the buffer memory 5b, as well as the format, frame rate and field rate of the video signal Mv of simple moving image stored in the buffer memory 5c. Further, among the video signals Mv of simple moving image stored in the buffer memory 5c, the video signal Mvc of simple moving image corresponding to an error period τv indicated by the switchover period control signal SWv is read out, followed by performing a format transform for adapting the video signal Mvc to the format of the video signal Hv, thereby outputting the format-transformed interpolation video signal Cv during the above error period τv. Furthermore, a ratio of the frame rate or field rate of the video signal Hv to the frame rate or field rate of the video signal Mvc is detected, followed by repeatedly outputting the interpolation video signal Cv for the number of actually detected times, thereby outputting the interpolation video signal Cv in accordance with the frame rate or field rate of the video signal Hv.

The switchover unit 7a, at the time a switchover period control signal SWv is not supplied from the interpolation control unit 9, produces as an output video signal Dv a video signal Hv stored in the buffer memory 5b. Meanwhile, the switchover unit 7a, at the time the switchover period control signal SWv is supplied hereto, produces as an output video signal Dv during the above error period τv, not the above video signal Hv, but an interpolation video signal Cv generated in the video format transforming unit 7b. Therefore, when an error occurs in the video signal Hv being received and reproduced, an interpolation video signal Cv, rather than an error signal, will be outputted as an output video signal Dv, thereby generating an output video signal Dv capable of preventing a deterioration in picture quality.

The audio format transforming unit 8b, upon receiving a sound-related signal VDF and a switchover period control signal SWa from the interpolation control unit 9, analyzes the contents of the sound-related signal ADF, thereby identifying the format of the audio signal Ha stored in the buffer memory 6b, as well as the format of the audio signal Mv of simple moving image stored in the buffer memory 6c. Further, among the audio signals Ma of simple moving image stored in the buffer memory 6c, the audio signal Mac corresponding to an error period τa indicated by the switchover period control signal SWa is read out, followed by performing a format transform for adapting the audio signal Mac to the format of the audio signal Ha, thereby outputting the format-transformed interpolation video signal Ca during the above error period τa.

The switchover unit 8a, at the time a switchover period control signal SWv is not supplied from the interpolation control unit 9, produces as an output audio signal Da an audio signal Ha stored in the buffer memory 6b. Meanwhile, the switchover unit 8a, at the time the switchover period control signal SWv is supplied hereto, produces as an output audio signal Da during the above error period τa, not the above audio signal Ha, but an interpolation audio signal Ca generated in the audio format transforming unit 8b. Therefore, when an error occurs in the audio signal Ha being received and reproduced, the interpolation video signal Ca, rather than the above error signal, will be outputted as an output audio signal Da, thereby generating an output audio signal Da capable of preventing a deterioration in sound quality.

As described above, according to the interpolation device of the present embodiment, during a process in which a receiver is receiving simultaneous broadcasting, receiving and reproducing a channel of a hierarchy other than simple moving image, once an error occurs in the video signal Hv, the interpolation control unit 9 will detect the period τv of the error, while the video format transforming unit 7b and the switchover unit 7a will format-transform the video signal Mvc of simple moving image corresponding to the period τv of the error into an interpolation video signal Cv adapted to the format of the video signal Hv being received and reproduced. In this way, since the video signal Hv is interpolated with the interpolation video signal Cv during the error period τv, it is possible to generate an output video signal Dv capable of preventing a deteriorated picture quality.

Moreover, according to the interpolation device of the present embodiment, during a process in which a receiver is receiving simultaneous broadcasting, receiving and reproducing a channel of a hierarchy other than simple moving image, even if an error occurs in the audio signal Ha, the audio format transforming unit 8b and the switchover unit 8a will format-transform the audio signal Mac corresponding to the error period τa into an interpolation video signal Ca adapted to the format of the audio signal Ha being received and reproduced. In this way, since the audio signal Ha is interpolated with the interpolation video signal Ca during the error period τa, it is possible to generate an output video signal Da capable of preventing a deteriorated sound quality.

Moreover, according to the interpolation device of the present embodiment, as described above, during a process in which a receiver is receiving and reproducing a channel of a hierarchy other than simple moving image, when an error occurs in the video signal Hv, since the video signal Hv is interpolated with an interpolation video signal Cv during the period τv of the error, it is possible to perform an interpolation within a frame or a field without performing an interpolation in each frame period or field period.

Moreover, the interpolation device of the present embodiment generates an interpolation video signal Cv from a video signal of simple moving image, rather than predicting an interpolation signal from a signal before a video signal in which an error has occurred. Therefore, it is possible to quickly perform an interpolation processing even if an error occurs when an image has a quick movement or changes to other thing. As a result, it is possible to quickly perform an interpolation processing without performing a high speed computation.

## Claims

1. An interpolation device for interpolating an error signal contained in a video signal outputted from a receiver which receives simultaneous broadcasting, said interpolation device comprising:
interpolation control means which detects an error signal contained in a video signal of a program of a hierarchy being received and reproduced by the receiver, and obtains program specification information of the video signal of the program of the hierarchy being received and reproduced, as well as program specification information of a hierarchy of simple moving image, and outputs a switchover period control signal indicating the period of the detected error signal, and an image-related signal indicating the program specification information; and
interpolation means which, in accordance with the switchover period control signal and the image-related signal, extracts a video signal of simple moving image corresponding to the period of the error signal, generates an interpolation video signal by performing a format transform for adapting the extracted video signal of simple moving image to the format of the video signal of the program of the hierarchy being received and reproduced, and interpolates, during the period of the error signal and using the interpolation video signal, the error signal contained in the video signal of the program of the hierarchy being received and reproduced.

2. The interpolation device according to claim 1, wherein the interpolation means, in accordance with format information relating to pixel size, frame rate or field rate contained in the program specification information, performs a format transform for adapting the video signal of simple moving image corresponding to the period of the error signal to the format of the video signal of the program of the hierarchy being received and reproduced, thereby generating said interpolation video signal.

3. An interpolation device for interpolating an error signal contained in an audio signal outputted from a receiver which receives simultaneous broadcasting, said interpolation device comprising:
interpolation control means which detects an error signal contained in an audio signal of a program of a hierarchy being received and reproduced by the receiver, and obtains program specification information of the audio signal of the program of the hierarchy being received and reproduced, as well as program specification information of a hierarchy of simple moving image, and outputs a switchover period control signal indicating the period of the detected error signal, and a sound-related signal indicating the program specification information; and
interpolation means which, in accordance with the switchover period control signal and the sound-related signal, extracts an audio signal of simple moving image corresponding to the period of the error signal, generates an interpolation audio signal by performing a format transform for adapting the extracted audio signal of simple moving image to the format of the audio signal of the program of the hierarchy being received and reproduced, and interpolates, during the period of the error signal and using the interpolation audio signal, the error signal contained in the audio signal of the program of the hierarchy being received and reproduced.

4. The interpolation device according to claim 3, wherein the interpolation means, in accordance with format information relating to an audio system contained in the program specification information, performs a format transform for adapting the audio signal of simple moving image corresponding to the period of the error signal to the format of the audio signal of the program of the hierarchy being received and reproduced, thereby generating said interpolation audio signal.

5. An interpolation device comprising the interpolation control means and the interpolation means according to claim 1 and the interpolation control means and the interpolation means according to claim 3.
